# EUROPEAN PATENT SPECIFICATION

(11) **EP 0 577 571 B1**
(45) Date of publication and mention of the grant of the patent: **01.10.1997**
(21) Application number: 93830290.8
(22) Date of filing: 02.07.1993
(51) Int. Cl.: B62D 7/15, B62D 13/06

(54) **A reverse steering group for a self-steering axle in trucks, articulated trucks and the like**
Lenkgruppe zur Rückwärtsfahrt für eine Selbstlenkachse in Lastkraftwagen, Sattelzügen oder dergleichen
Groupe de direction pour marche arrière pour un essieu auto-directeur pour camions, tracteur semi-remorques ou analogue

(30) Priority: 03.07.1992 IT BO920264; 24.06.1993 IT BO930296
(43) Date of publication of application: 05.01.1994
(73) Proprietor: Bettini, Marco, I-40010 Bentivoglio (Bologna) (IT)
(72) Inventor: Bettini, Marco, I-40010 Bentivoglio (Bologna) (IT)
(74) Representative: Lanzoni, Luciano

(56) References cited:
- EP-A- 0 343 049
- EP-A- 0 376 457
- AT-B- 383 900
- DE-A- 2 200 739
- DE-A- 3 837 981
- FR-A- 2 623 462

## Description

The invention relates to a reverse steering group in a self-steering axle in trucks, articulated trucks and the like.

Usually in vehicles of the above type, a posterior axle is self-steering in the drive direction. This creates the problem of avoiding understeer which can totally block the vehicles.

To avoid such an event, self-steering axles in trucks or articulated trucks, normally mounted in front of or behind the posterior axis of the vehicle, are provided with a blocking device activated pneumatically from the cabin. The device blocks the self-steering axle in a fixed position when reverse gear is engaged or when the driver gives the command.

So, during reversing, the trajectory of the vehicle is imposed by the front axis alone, which is steered on command from the drive position. This leads to considerable dragging and therefore wear of the tyres on the blocked axle.

Furthermore, the above solution determines a vehicle trajectory that is not always precise, due to the considerable friction forces produced on the wheels.

In DE-A-2200739 it is disclosed a reverse steering group in a self-steering axle of a semitrailer for articulated trucks, which axle comprises a transversal body to which opposite ends corresponding wheels are rotatably constrained, and a shackle bar arranged parallel to the transversal body, at least one hydraulic jack being interposed between the transversal body and the shackle bar. The reverse steering group is limited for semitrailers of articulated trucks.

Furthermore, in EP-A-0343049 there are disclosed steering means for the rear wheels of an axle being a non-self-steering axle of a trailer. The steering means comprise an electrohydraulic unit equipped with valve means for feeding hydraulic fluid to a hydraulic cylinder, first sensor means of the value of the steering angle of the vehicle and second sensor means of the angle assumed by the wheels of the rear axle, wherein the second sensor means are connected to the electrohydraulic unit which activates the valve means in accordance with a value calculated from the steering angle of the vehicle and the angle of the rear wheels.

A principal aim of the present invention is to solve the above-mentioned problem by providing a steering group which permits automatic reverse steering of an axle that is self-steering in the drive direction in trucks, articulated trucks and the like.

A further aim of the present invention is to provide a steering group for reverse steering which is essentially simple, reliable and versatile.

These aims are accomplished by the provision of a reverse steering group such as defined in claim 1.

The technical characteristics and advantages of the present invention will better emerge from the detailed description and claims that follow, of an embodiment of the invention, herein illustrated purely in the form of a non-limiting example in the accompanying figures, in which:
- figure 1 shows a chassis of a truck equipped with the reverse axle steering group in a schematic plan view from above with some parts removed in order better to evidence others;
- figure 2 shows the front and back parts of the chassis of the truck of figure 1 in an enlarged scale plan view from above;
- figure 3 shows a hydraulic diagram which is part of the steering group of the previous figures;
- figure 4 shows an articulated truck equipped with a self-steering axle and also equipped with a steering control group of the same axle in a schematic plan view from above;
- figures 5, 6 and 7 show the connection zone between a tractor and a trailer of an articulated truck equipped with the control group of figure 4, respectively in lateral view, plan view from above and frontal view, all schematic.

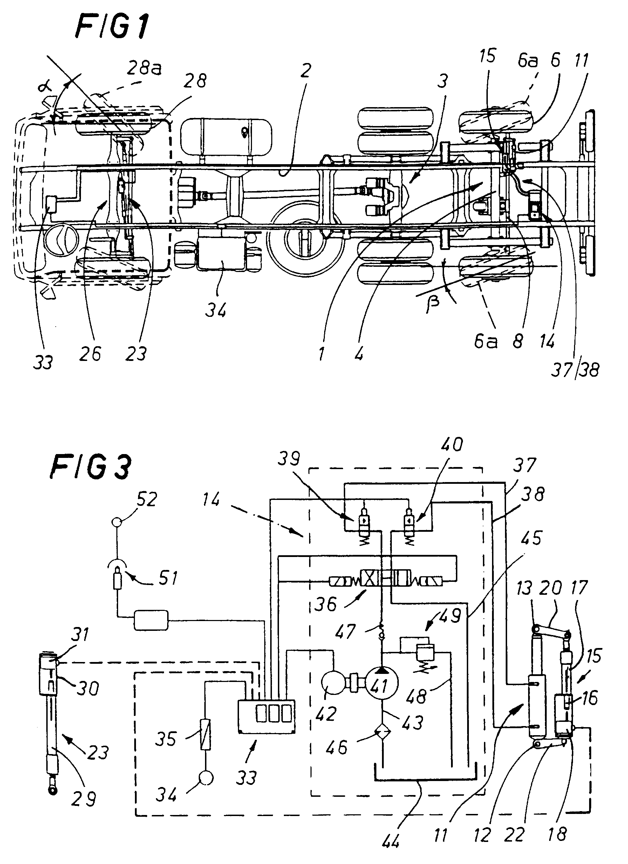

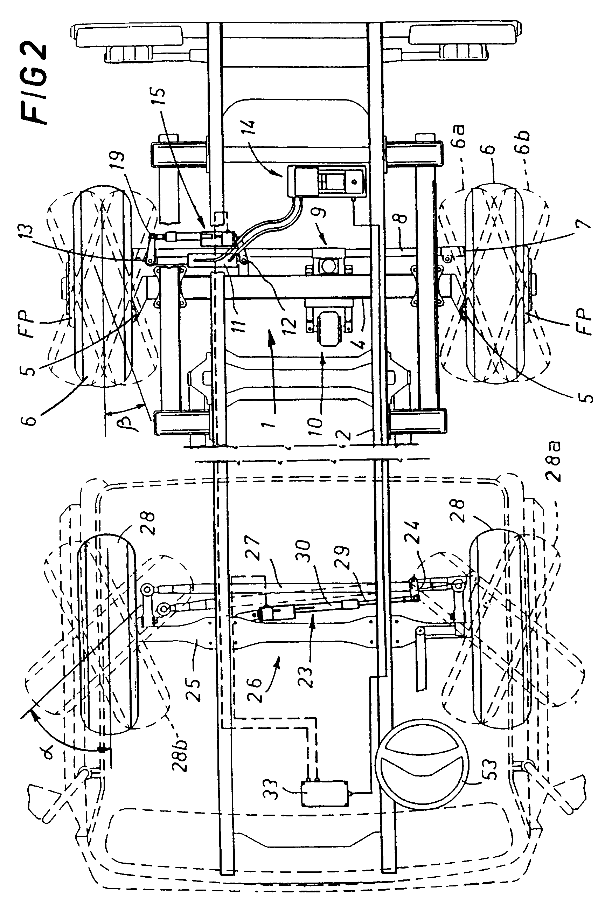

With special reference to figures 1 and 2, 1 denotes in its entirety a self-steering axle 1 mounted on the chassis 2 of a conventional articulated truck. In the illustrated case, the self-steering axle 1 is arranged posteriorly to the fixed back axle 3 of the vehicle (here only two back axles are illustrated purely by way of example).

The self-steering axle 1 has a known-type body 4, fixed to the chassis 2 and transversally longer than the said body 4, and bears at each end a stub axle Fp pivoted on a pivot 5, on which stub axle Fp a wheel is rotatably mounted. The ends of a back-wheel shackle bar 8 are hinged on respective pivots 7. A conventional blocking device 9 is mounted posteriorly to the body 4 of the self-steering axle 1, which blocking device 9 is pneumatically activatable from the vehicle cabin.

A stabiliser 10 of known type is mounted anteriorly to the body of the axle 1.

For greater descriptive simplicity, the steering group of a truck will be first described, followed by a further embodiment applied to an articulated truck.

In the first case, the group controlling and effecting reverse steer comprises one or more hydraulic actuators 11 (depending on whether they are composed of double- or single-acting jacks) which is or are hinged at one end through a pivot 12 to the self-steering axle and at the opposite end through another pivot 13 to the shackle bar 8.

The hydraulic jack 11 is pressure-fed by means of an electrohydraulic unit 14 which is activated on entry into reverse gear. The length variations of the hydraulic jack 11 (that is, the shortening or lengthening of the jack on the exiting and reentry of the jack stem) and consequently angle Beta defined by the wheels 6 are controlled by second sensor means 15.

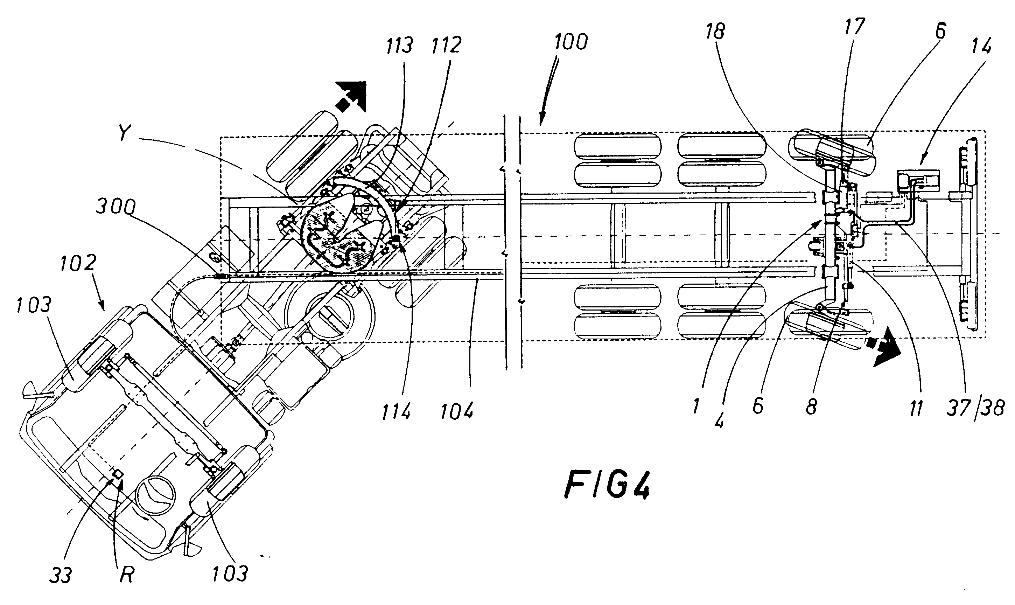

The second sensor means 15 are constituted (see figure 3) by a linear transducer 18 housed in a stem 16 which is slidably guided in a sort of shaped casing 17. The linear transducer 18 is connected to an end of the stem 16. The other end of the stem 16 and the casing 17 are fixed by means of brackets 20 and 22 to the ends of the hydraulic jack 11. It is advantageous to insert the linear transducer 18 internally to the hydraulic jack 11 too, thus realising a single push and control element of the wheel 6.

First sensor means 23 of the vehicle steering angle α are provided, which are constituted by a transducer 31 arranged, with a lever 24 interpositioned, between a vehicle front axle 26 body 25 and a bar 27 provided for coupling second steering wheels 28 of the same axle. The sensor means 23 is structured in the same way as the second sensor means 15: one stem 29, one casing 30 and the transducer 31 of the sensor means 23 correspond to the elements already denoted by 16, 17 and 18.

The transducer 31 "reads" the angles α which the wheels 28 assume during the steering operation and turns them into electric signals, which together with those coming from the second sensor means 15 are processed by an electronic exchange 33 supplied by a battery 34 and equipped with a protection fuse 35, and serving the electrohydraulic unit 14.

The unit 14, independent of the rest of the constituent elements of the group, and illustrated in detail in figure 3, has a three-way solenoid valve 36 which controls the feed pipes 37 and 38 of the respective opposite chambers of the hydraulic jack 11. Respective cut-off valves 39 and 40 are arranged on the pipes 37 and 38, which valves 39 and 40, like the solenoid valve 36, are also controlled by the electronic exchange 33.

The dynamic fluid is fed to the chambers by a gear pump 41 activated by an electric motor 42 connected to the electronic exchange 33; the gear pump 41 takes the fluid from a tank 44 through a pipe 43 (equipped with a special filter 46), while the hydraulic fluid can return to the tank 44 through an independent pipe 45. In order to operate the fluid feeding correctly a check valve 47 is provided between the pump 41 and the valve 36, which check valve 47 is the start point for a discharge pipe 48 going into the tank 44, which pipe 48 is equipped with a maximum pressure valve 49.

There is also a microswitch 51 connected to the electronic exchange 33, which microswitch 51 is activated on engagement of reverse gear.

The device functions as follows: after the on command has been sent to the switch 50 and the reverse gear has been engaged, the cabin steering wheel 53 of the truck is turned so as to bring the front wheels 28 towards, for example, full steer lock 28a. Progressive signals regarding the α angle of the front wheels are sent from the transducer 31 to the electronic exchange 33, which causes the motor 42 of the pump 41 to start and the valve 36 to open in the appropriate direction: the hydraulic fluid is sent to the hydraulic jack 11 cylinder chamber for which reason, if the wheels 28 are moving towards position 28a, the wheels must move towards the maximum steer position 6a and the hydraulic jack 11 stem extends. If on the other hand the vehicle driver turns the wheels 28 towards the other full lock position 28b, the hydraulic jack 11 chamber connected to the pump delivery 41 is the same one which causes the reentry of the stem 29 and thus the movement of the wheels 6 towards the other maximum steer position 6b.

Signals regarding the movement of the shackle bar 8 of the wheels 6, and thus regarding the angle assumed by the said wheels 6 are also progressively sent by the second sensor means 15 to the electronic exchange 33, which makes sure there is a correct correspondence between the angle of the wheels 6 and the second steering wheels 28. The wheels 6 might not be following the others due to an obstacle, for example the presence of a raised footpath. In such a case, once the obstacle is removed, the electronic exchange 33 sees that the wheels 6 proceed to the not-yet-reached angle.

Worthy of note is the fact that full steer lock of the wheels 6 can be reached when the second steering wheels 28 have not yet reached that state. The amplitude of the steer rotation necessary in order to obtain a full steer lock on the self-steering axle 1 is however adjusted, in accordance with the different types of vehicle, by means of the electronic exchange 33.

The presence of the valves 39 and 40 contributes to ensuring that a determined angle of the wheels 6 is maintained when the vehicle driver has brought the front wheels up to the desired steer degree. As soon as the sensor means 23 stops sending second steering wheel 28 angle variations to the electronic exchange 33, thus indicating that a steering manoeuvre has been completed, forces acting on the wheels 6 (reactions from the ground to the tyre tensions due to elastic deformation) would tend to create an opposite-direction force on them with regard to the desired direction. In this case the electronic exchange 33 stops the motor 42 and the pump 41 and closes the valve 39 or 40 (normally open), which would otherwise permit the discharge of the hydraulic jack 11 chamber due to a return movement of the wheels 6.

A further safeguard is offered by the the fact that the electronic exchange 33, and therefore the electrohydraulic gear case, is programmed to stay in a non-operative stand-by configuration during normal vehicle movement, making the above-mentioned valve means realise a hydraulic circuit which is such as to permit the free passage of the fluid between the hydraulic jack 11 chambers so that they do not interfere with the normal rotation of the wheels on the self-steering axle.

Similarly to this above application, the group can be used on articulated trucks 100, see figures 4 to 7, composed of a traditional motor-tractor 102 exhibiting a first, steering wheel pair 103 to which tractor 102 an end of a trailer 104 (whose mass is illustrated by a broken line in figure 4) is constrained. The rotatable constraint between the tractor 102 and the semitrailer 104 is made by means of a fifth wheel 105, rotatable about a vertical axis Y and coupled to a rotatable coupling pivot 105p at the front end of the semitrailer 104.

In this specific case the above-mentioned first sensor means 23 of angle a of the vehicle are constituted by a reference element 113 solid to the fifth wheel 105, arranged in proximity to it so as to exhibit a rotation axis that coincides with the said vertical rotation axis Y of the fifth wheel 105.

Facing the reference element 113 is a reference element 113 position reader 114 arranged on the semitrailer 104 and in a fixed position with respect to the semitrailer 104 so that it can follow the reference element 113 rotation (following the fifth wheel 105 rotation) and provide a corresponding exit signal to the electrohydraulic unit 14, according to the relative position reading between the above.

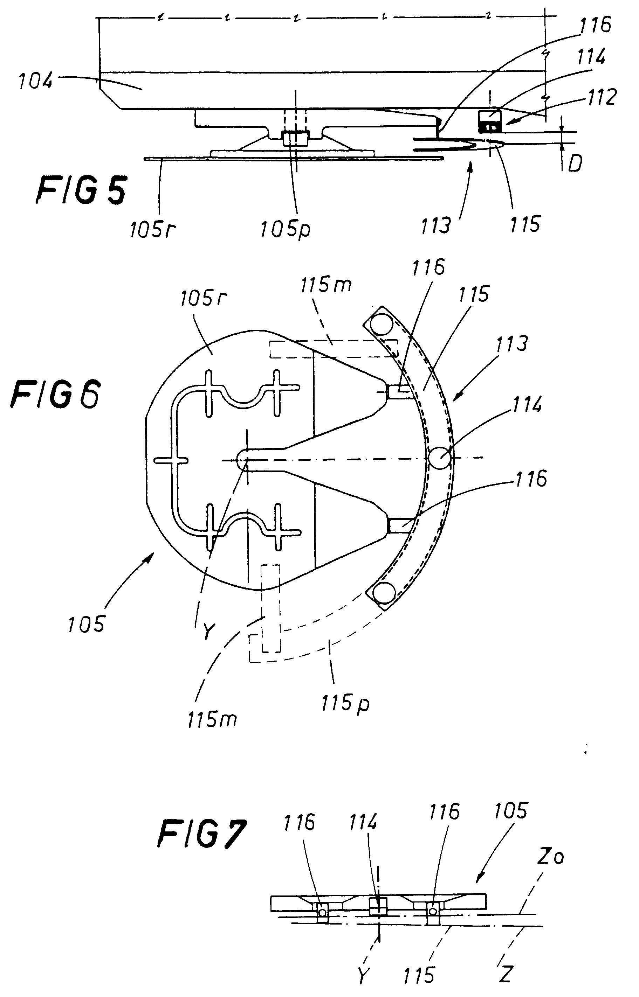

More precisely, and as illustrated in detail in figures from 5 to 7, the reference element 113 is constituted by an arched metal sheet 115 which is fixed, by means of at least two shelves 115m (shown in a broken line in figure 6) and two vertical stabilising columns 116 to a flat fifth wheel 105r constituting part of the fifth wheel 105. In figure 7 it can be seen how the arched sheet 115 is fixed to the flat fifth wheel 105 so that it is on an inclined plane Z with respect to a horizontal plane Zo perpendicular to the said rotation axis Y of the fifth wheel 105. In figure 6 its can be observed how the sheet 115 can be made with a symmetrical development with respect to the rotation axis Y or with an asymmetrical development: in the latter case the sheet 115 has a prolongation 115p (illustrated with a broken line) at one of its ends, which exhibits a null angle (that is, it is parallel and coplanar) with respect to the said horizontal reference plane Zo.

The sensor 114 can be constituted by a proximity sensor of known type with inductive-type functioning and with an analogic output signal, which is arranged superiorly to the arched sheet 115 and solid to an inferior surface of the semitrailer 104 (see figure 5 in particular).

The proximity sensor 114 is connected directly to the electrohydraulic unit 14 by means of, for example, an interface card transforming the analogic signal from the sensor 114 into a compatible electric signal and with the electronic exchange 33 card. In this way the sensor 114 activates on engagement of the reverse gear and acts on the unit 14 in accordance with the reading of its own distance D from the sheet 115, a distance which varies according to the rotation of the sheet 115.

The entire control group can be fed by means of a simple connection with the principal feeding system of the tractor 102 (denoted by 300 in figure 4).

The proximity sensor functions in the following way: when the reverse gear R is engaged, the sensor 114 activates and calculates the distance (indicated by D in figure 5) between itself and the metal sheet 115; the value of the distance determines the sending of a signal from the sensor 114 with a tension that is proportional to the distance to the unit 14 which thus varies the position of the second wheels 6 of the self-steering axle 1 after having compared the first signal with the one sent from the linear transducer.

Each time the tractor 102 changes its position, the fifth wheel 105 in consequence performs a rotation that brings the sheet 115, having an inclined development, to distance from or near the sensor 114 which in its turn sends a tension signal proportional to relative distance D and thus proportional to the rotation effected by the fifth wheel 105.

Thus the group as it is structured herein exhibits considerable advantages:
- the structure is simple and applicable on self-steering axles both of vehicles now under production and in those already in use thanks to the fact that independent elements are used (especially the electrohydraulic gearcase), which permit of safe, riskless mounting;
- the use of the device is sure and precise thanks to the two angle reading elements and the possibility of obtaining rotations of the wheels of the axle with a hydraulic system permitting activation also where temporary obstacles are present;
- thanks to the above-mentioned interface card between the sensor and the gearcase it is possible to compact control elements with output signals which are different from those of the exchange.

The entire group can of course be modified if it is necessary to control more than one self-steering axle of the same truck or articulated truck.

## Claims

1. A reverse steering group in a self-steering axle for trucks, articulated trucks and the like, which axle (1) comprises a transversal body (4) to which opposite ends corresponding wheels (6) are rotatably connected, and a shackle bar (8), arranged parallel to the transversal body (4); and wherein the reverse steering group comprises:
- at least one hydraulic jack (11) interposed between the transversal body (4) and the shackle bar (8) coupling the wheels (6) on the axle (1); characterized in that it contains:
**a)** an independent electrohydraulic unit (14) activatable on an engagement of the reverse gear and equipped with valve means (37, 38) for feeding hydraulic fluid to the hydraulic jack (11), so as to realise a corresponding movement of the shackle bar (8) in a relation with a value of a steering angle α of the vehicle;
**b)** first sensor means (23) of the value of steering angle α of the vehicle and second sensor means (15) of an angle β assumed by the wheels (6) on the self-steering axle (1),
**c)** which second sensor means (15) are connected to the electrohydraulic unit (14) and command an activation of the valve means (37, 38) of the electrohydraulic unit (14) in accordance with a relation between the angles α and β calculated;
**d)** the second sensor means (15) are constituted by a linear transducer (18) interposed between the two mobile elements of the self-steering axle (1) constituted by the shackle bar (8) and the transversal body (4).

2. A group as in claim 1, characterised in that the linear transducer (18) is arranged by a side of the hydraulic jack (11), in order to follow shortenings and lengthenings of the jack (11).

3. A group as in claim 1 applicable on articulated trucks, comprising a single-body chassis (2) exhibiting anteriorly a second axle (26) equipped with second steering wheels (28) united by a second transversal body (25) and connected by a second shackle bar (27) and, posteriorly, by the self-steering axle (1), characterised in that the said first sensor means (23) are interposed between the second transversal body (25) of the second anterior axle (25) of the vehicle and the second shackle bar (27) of the second wheels (28) of the second axle (25).

4. A group as in claim 3, characterised in that the first sensor means (23) are constituted by a second linear transducer (31).

5. A group as in claim 1 applicable on articulated trucks (101) composed of a motor or tractor (102) exhibiting a first steering wheel pair (103) and to which an end of a semitrailer (104) is connected by means of a fifth wheel (105) rotatable about a vertical axis (Y); the semitrailer (104) having at least one self-steering axle (1) arranged in proximity to another end of the same semitrailer (104), characterised in that the first sensor means (23) are constituted by a reference element (113) solid to the fifth wheel (105) and facing which a sensor (114) of a position of the reference element (113) is provided, arranged in a fixed position on the semitrailer (104) in such a way as to follow a rotation of the reference element (113) following a rotation of the fifth wheel (105) and to provide a corresponding output signal to the electrohydraulic unit (14) in accordance with a relative position between the sensor (114) and the reference element (113).

6. A group as in claim 5, characterised in that the reference element (113) is constituted by an arched metal sheet (115) arranged in proximity to the fifth wheel (105) and having a rotation axis coinciding with the vertical rotation axis (Y) of the fifth wheel (105).

7. A group as in claim 5, characterised in that the reference element (113) is constituted by an arched sheet (115) developing on an inclined plane (Z) with respect to a horizontal plane (Zo) perpendicular to the rotation axis (Y), and the sensor (114) is constituted by a proximity sensor which reads the variation in its own distance (D) from the said sheet (115) in accordance with the relative rotation of the sensor (114) and the sheet (115).

8. A group as in claim 5, characterised in that the sensor (114) is arranged superiorly to the reference element (113) and solid to the semitrailer (104).

9. A group as in claim 7, characterised in that the sheet (115) has a symmetrical development with respect to the rotation centre of the fifth wheel (105).

10. A group as in claim 7, characterised in that the sheet (115) exhibits a prolongation (115p) at one of its ends, such as to define an asymmetrical development with a null angle with respect to the horizontal reference plane (Zo).

11. A group as in claim 1, characterised in that the independent electrohydraulic gearcase (14) serves an electronic exchange (33) activatable through a microswitch (51) destined to be activated in accordance with an engagement of the reverse gear; the electronic exchange (33) piloting, in an active configuration, the valve means (37, 38) and a supply pump (41) of the electrohydraulic gearcase (14), and receiving and processing signals coming from the first and second sensor means (23, 15).

12. A group as in claim 11, characterised in that the valve means (37, 38) create between them a circuit permitting free translation of the hydraulic jack (11) in accordance with a stand-by non-operative configuration of the electronic exchange (33).

13. A group as in claim 1, characterised in that the valve means (37, 38), piloted by the electronic exchange (33), comprise a three-way solenoid valve (36) for control of feed pipes of opposite chambers of the hydraulic jack (11); the valve means (37, 38) further comprising, for each of the supply pipes, a cut-off valve (39, 40) arranged between the solenoid valve (36) and a respective chamber of the hydraulic jack (11) to permit of closing the chamber on command of the electronic exchange (33), so as to maintain a determined angle of the wheels (6) of the self-steering axle (1) in absence of angle changes of the vehicle.

## Patentansprüche

1. Lenkgruppe zur Rückwärtsfahrt für eine Selbstlenkachse in Lastkraftwagen, Sattelzügen oder dergleichen, welche Achse (1) einen Querkörper (4) enthält, an dessen entgegengesetzten Enden entsprechende Räder (6) drehbar befestigt sind, sowie eine Lenkverbindungsstange (8), die parallel zu dem Querkörper (4) angeordnet ist, und wobei die Lenkgruppe zur Rückwärtsfahrt weiter enthält:
- wenigstens einen Hydrauliktrieb (11), eingesetzt zwischen dem Querkörper (4) und der Lenkverbindungsstange (8), welche die Räder (6) an der Achse (1) koppelt;
**dadurch gekennzeichnet**, dass sie wie folgt umfasst:
**a)** ein unabhängiges elektrohydraulisches Aggregat (14), aktivierbar durch Einlegen des Rückwärtsganges und versehen mit Ventilmitteln (37, 38) zum Speisen des Hydrauliktriebes (11) mit hydraulischer Flüssigkeit, um so eine entsprechende Verschiebung der Lenkverbindungsstange (8) zu bewirken, und zwar im Verhältnis zu einem Wert eines Lenkwinkels α des Fahrzeugs;
**b)** erste Abtastmittel (23) des Wertes des Lenkwinkels α des Fahrzeugs und zweite Abtastmittel (15) eines Winkels β, eingenommen von den Rädern (6) an der Selbstlenkachse (1);
**c)** welche zweiten Abtastmittel (15) an das elektrohydraulische Aggregat (14) angeschlossen sind und eine Aktivierung der Ventilmittel (37, 38) des elektrohydraulischen Aggregates (14) je nach dem Verhältnis zwischen den berechneten Winkeln α und β steuern;
**d)** die zweiten Abtastmittel (15) werden aus einem linearen Umwandler (18) gebildet, der zwischen den beiden beweglichen Elementen der Selbstlenkachse (1) eingesetzt ist, bestehend aus der Lenkverbindungsstange (8) und dem Querkörper (4).

2. Lenkgruppe nach Patentanspruch 1, **dadurch gekennzeichnet**, dass der lineare Umwandler (18) an einer Seite des Hydrauliktriebes (11) angeordnet ist, so dass er den Verkürzungen und den Verlängerungen des Triebes (11) folgen kann.

3. Lenkgruppe nach Patentanspruch 1, anbringbar an Sattelzügen und enthaltend ein Chassis (2) aus einem Stück, welches vorn eine zweite Achse (26) aufweist, versehen mit zweiten Lenkrädern (28), die durch einen zweiten Querkörper (25) miteinander vereint und durch eine zweite Lenkverbindungsstange (27) verbunden sind, sowie hinten durch die Selbstlenkachse, **dadurch gekennzeichnet**, dass die genannten ersten Abtastmittel (23) zwischen dem zweiten Querkörper (25) der zweiten vorderen Achse (25) des Fahrzeugs und der zweiten Lenkverbindungsstange (27) der zweiten Räder (28) der zweiten Achse (25) eingesetzt sind.

4. Lenkgruppe nach Patentanspruch 3, **dadurch gekennzeichnet**, dass die ersten Abtastmittel (23) aus einem zweiten linearen Umwandler (31) gebildet werden.

5. Lenkgruppe nach Patentanspruch 1, anbringbar an Sattelzügen (101), bestehend aus einer Antriebs- oder Zugmaschine (102), die ein erstes Lenkräderpaar (103) aufweist, und an welcher ein Ende eines Aufliegers (104) mit Hilfe eines fünften Rades bzw. Aufsattels (105) befestigt ist, drehbar um eine vertikale Achse (Y); wobei der Auflieger (104) wenigstens eine Selbstlenkachse (1) hat, angeordnet in der Nähe eines anderen Endes desselben Aufliegers (104), **dadurch gekennzeichnet**, dass die ersten Abtastmittel (23) aus einem Bezugselement (113) gebildet werden, welches fest mit dem fünften Rad oder Aufsattel (105) verbunden ist, und diesem zugewandt ist ein Abtaster (114) der Position des Bezugselementes (113) vorgesehen, angeordnet in einer feststehenden Position an dein Auflieger (104) auf solche Weise, dass er einer Umdrehung des Bezugselementes (113) folgt, die aufgrund einer Umdrehung des fünften Rades oder Aufsattels (105) erfolgt und ein entsprechendes Ausgangssignal an das elektrohydraulische Aggregat (14) je nach der entsprechenden Position zwischen dem Abtaster (114) und dem Bezugselement (113) auslöst.

6. Lenkgruppe nach Patentanspruch 5, **dadurch gekennzeichnet**, dass das Bezugselement (113) aus einem gebogenen Blech (115) gebildet wird, angeordnet in der Nähe des fünften Rades oder Aufsattels (105) und mit einer Drehachse versehen, die mit der vertikalen Drehachse (Y) des fünften Rades oder Aufsattels (105) übereinstimmt.

7. Lenkgruppe nach Patentanspruch 5, **dadurch gekennzeichnet**, dass das Bezugselement (113) aus einem gebogenen Blech (115) gebildet wird, welches sich im Verhältnis zu einer horizontalen Ebene (Zo) rechtwinklig zu der Drehachse (Y) entlang einer geneigten Ebene (Z) entwickelt, und dass der Abtaster (114) aus einem Annäherungsfühler besteht, welcher die Veränderung seines eigenen Abstandes (D) von dem genannten Blech (115) je nach der entsprechenden Umdrehung des Abtasters (114) und des Bleches (115) erfasst.

8. Lenkgruppe nach Patentanspruch 5, **dadurch gekennzeichnet**, dass der Abtaster (114) oberhalb des Bezugselementes (113) angeordnet und fest mit dem Auflieger (104) verbunden ist.

9. Lenkgruppe nach Patentanspruch 7, **dadurch gekennzeichnet**, dass das Blech (115) im Verhältnis zu der Drehmitte des fünften Rades oder Aufsattels (105) eine symmetrische Entwicklung aufweist.

10. Lenkgruppe nach Patentanspruch 7, **dadurch gekennzeichnet**, dass das Blech (115) an einem seiner Enden eine Verlängerung (115p) aufweist, so dass eine asymmetrische Entwicklung mit einem Nullwinkel im Verhältnis zu der horizontalen Bezugsebene (Zo) beschrieben wird.

11. Lenkgruppe nach Patentanspruch 1, **dadurch gekennzeichnet**, dass das unabhängige elektrohydraulische Aggregat (14) eine elektronische Einrichtung (33) bedient, aktivierbar durch einen Mikroschalter (51) und dazu bestimmt, im Zusammenhang mit dem Einschalten des Rückwärtsganges aktiviert zu werden; wobei die elektronische Einrichtung (33) in einem aktiven Zustand die Ventilmittel (37, 38) sowie eine Zuführpumpe (41) des elektrohydraulischen Aggregates (14) steuert und von den ersten und zweiten Abtastmitteln (23, 15) kommende Signale empfängt und verarbeitet.

12. Lenkgruppe nach Patentanspruch 11, **dadurch gekennzeichnet**, dass die Ventilmittel (37, 38) zwischen sich einen Kreis schaffen, welcher die freie Verschiebung des Hydrauliktriebes (11) erlaubt, und zwar in Übereinstimmung mit einem stand-by oder nicht operativen Zustand der elektronischen Einrichtung (33).

13. Lenkgruppe nach Patentanspruch 1, **dadurch gekennzeichnet**, dass die Ventilmittel (37, 38), die von der elektronischen Einrichtung (33) gesteuert werden, ein Dreiwege-Magnetventil (36) zur Steuerung der Speiseleitungen von entgegengesetz: angeordneten Kammern des Hydrauliktriebes (11) enthalten; wobei die Ventilmittel (37, 38) weiterhin für jede der Zuführleitungen ein Abschlußventil (39, 40) enthalten, angeordnet zwischen dem Magnetventil (36) und einer entsprechenden Kammer des Hydrauliktriebes (11), um das Schließen der Kammer auf den Befehl der elektronischen Einrichtung (33) zu erlauben, so dass ein bestimmter Winkel der Räder (6) der Selbstlenkachse (1) beim Fehlen von Winkelveränderungen des Fahrzeugs beibehalten wird.

## Revendications

1. Un groupe de direction pour marche arrière pour un essieu auto-directeur pour camions, tracteur semi-remorques ou analogue, dont l'essieu (1) comprend un corps transversal (4) aux extrémités duquel sont logées les roues à rotation forcée (6), et une barre de traction (8), placée en position parallèle au corps transversal (4); et où le groupe de direction pour marche arrière comprend:
- au moins un vérin hydraulique logé entre le corps transversal (4) et la barre de traction (8), pour accoupler les roues (6) sur l'essieu (1); caractérisé par le fait qu'il contient:
**a)** une unité électrohydraulique (14) actionnable par l'enclenchement de la marche arrière et équipée de valves (37 et 38) pour l'alimentation en fluide hydraulique du vérin hydraulique (11), de façon à réaliser un mouvement correspondant de la barre de traction (8) en rapport avec la valeur de l'angle de direction **a** du véhicule;
**b)** un premier capteur (23) mesurant la valeur de l'angle de direction **a** du véhicule et un second capteur (15) mesurant l'angle **b** formé par les roues (6) de l'essieu auto-directeur (1),
**c)** ledit second capteur (15) est branché à l'unité électrohydraulique (14) et active par commande les valves (37 et 38) de l'unité électrohydraulique selon le rapport calculé entre les angles **a** et **b**;
**d)** le second capteur (15) est formé d'un transducteur linéaire (18) logé entre les deux éléments mouvants de l'essieu auto-directeur (1) formé par la barre de traction (8) et le corps transversal (4)

2. Un groupe selon la revendication 1 caractérisé par le fait que le transducteur linéaire (18) est placé sur un côté de vérin hydraulique (11), de façon à suivre l'allongement ou le raccourcissement du vérin (11).

3. Un groupe selon la revendication 1 qui peut être appliqué aux tracteurs semi-remorques, comprenant un chassis à corps unique (2) ayant antérieurement un second essieu (26) équipé d'un second groupe de roues de direction (28) réunies par un second corps transversal (25) et reliées par une seconde barre de traction (27), et caractérisé, postérieurement par l'essieu auto-directeur, par le fait que ledit premier capteur (23) est placé entre le second corps transversal (25) du second essieu antérieur (25) du véhicule et la seconde barre de traction (27) du second groupe de roues (28) du second essieu (25).

4. Un groupe selon la revendication 3, caractérisé par le fait que le premier capteur (23) est constitué d'un second transducteur linéaire (31).

5. Un groupe selon la revendication 1 qui peut être utilisé sur des camions semi-remorques (101) composés d'un tracteur (102) traditionnel présentant une première paire de roues de direction (103) et auquel est accroché l'extrémité d'une remorque (104) par l'intermédiaire d'une cinquième roue (105), rotative autour d'un axe vertical (Y); la remorque (104) ayant au moins un essieu auto-directeur (1) placé à proximité d'une autre extrémité de la même remorque (104), caractérisé par le fait que le premier capteur (23) est constitué d'un élément de référence (113) solidaire de la cinquième roue (105) et placé en face d'un capteur (114) de lecture de la position de l'élément de référence (113), placé sur la remorque (104) dans une position fixe de manière à pouvoir suivre la rotation de l'élément de référence (113) suivant la rotation de la cinquième roue (105) et qui envoie à l'unité électrohydraulique 14 un signal en sortie correspondant, selon la position relative du capteur (114) par rapport à l'élément de référence (113).

6. Un groupe selon la revendication 5, caractérisé par le fait que l'élément de référence (113) est constitué d'une plaque métallique arquée (115) placée à proximité de la cinquième roue (105) ayant un axe de rotation coïncidant avec l'axe de rotation vertical (Y) de la cinquième roue (105).

7. Un groupe selon la revendication 5 caractérisé par le fait que l'élément de référence (113) est constitué d'une plaque arquée (115) se développant sur un plan incliné (Z) par rapport au plan horizontal (Zo) perpendiculaire à l'axe de rotation (Y), et que le capteur (114) est constitué par un capteur de proximité lequel lit la variation de sa propre distance (D) par rapport à ladite plaque (115) en fonction de la relative rotation du capteur (114) et de la plaque (115).

8. Un groupe selon la revendication 5, caractérisé par le fait que le capteur (114) est placé au dessus de l'élément de référence (113) solidaire à la remorque (104).

9. Un groupe selon la revendication 7, caractérisé par le fait que la plaque (115) a un développement symétrique par rapport au centre de rotation de la cinquième roue (105).

10. Un groupe selon la revendication 7, caractérisé par le fait que la plaque (115) présente un prolongement (115p) à l'une de ses extrémités, de manière à définir un développement asymétrique formant un angle nul par rapport au plan horizontal de référence (Zo).

11. Un groupe selon la revendication 1, caractérisé par le fait que l'unité électrohydraulique indépendante (14) est asservie par une centrale électronique activable par l'intermédiaire d'un microinterrupteur (51) destiné à être actionné en correspondance avec l'enclenchement de la marche arrière; la centrale électronique (33) commande, dans une configuration active, les valves (37 et 38) et une pompe (41) de l'unité électrohydraulique (14), reçoit et traite les signaux venant des premier et second capteur (23 et 15).

12. Un groupe selon la revendication 11, caractérisé par le fait que les valves (37 et 38) créent entre elles un circuit permettant la translation libre du vérin hydraulique (11) en correspondance avec une configuration de veille (stand-by) de la centrale électronique (33).

13. Un groupe selon la revendication 1, caractérisé par le fait que les valves (37 et 38), pilotées par la centrale électronique (33), comprennent une électrovalve 36 à trois positions qui contrôle les conduits d'alimentation des chambres opposées du vérin hydraulique (11); les valves (37 et 38) comprennent également, pour chacun des conduits, une valve de bloquage (39 et 40) positionnée entre l'électrovalve (36) et la chambre respective du vérin hydraulique (11) afin de permettre de fermer la chambre sur commade de la centrale électronique (33), de manière à maintenir un angle déterminé des roues (6) de l'essieu auto-directeur (1) en l'absence de changements de l'angle du véhicule.
